# EUROPÄISCHE PATENTSCHRIFT

(11) **EP 1 195 208 B1**
(45) Veröffentlichungstag und Bekanntmachung des Hinweises auf die Patenterteilung: **28.12.2005**
(21) Anmeldenummer: 01123618.9
(22) Anmeldetag: 02.10.2001
(51) Int. Cl.: B21D 39/03, B62D 21/09

(54) **Verfahren zum Herstellen lokal verstärkter Blechumformteile**
Method to produce locally reinforced sheet metal
Procédé de fabrication de pièces de formage en tôle localement renforcées

(30) Priorität: 07.10.2000 DE 10049660
(43) Veröffentlichungstag der Anmeldung: 10.04.2002
(73) Patentinhaber: DaimlerChrysler AG, 70567 Stuttgart (DE)
(72) Erfinder: Brodt, Martin, 71272 Renningen (DE); Kröger, Matthias, 33034 Brakel (DE); Leutelt, Wolfgang, 71229 Leonberg (DE); Mayrhofer, Robert, 71032 Böblingen (DE)

(56) Entgegenhaltungen:
- WO-A-98/31485
- DE-A- 4 307 563
- DE-C- 19 529 881
- GB-A- 1 490 535

## Beschreibung

Die Erfindung geht aus von einem Verfahren zum Herstellen lokal verstärkter Blechumformteile, insbesondere als Strukturteile von Kraftfahrzeugkarosserien, nach dem Oberbegriff von Anspruch 1, wie es beispielsweise aus der DE 43 07 563 A1 als bekannt hervorgeht.

Im Zuge der Gewichtseinsparung an Kraftfahrzeugkarosserien ist es bekannt, an Krafteinleitungsstellen in aus Blech bestehenden Strukturteilen von Karosserien lokal beschränkte Verstärkungsbleche vorzusehen, um nicht das gesamte Strukturteil aus einem dicken Blech herstellen zu müssen. Zur Erhöhung der Biegesteifigkeit von aus Blechschalen gebildeten Hohlträgern können Verstärkungsbleche innen- oder außenseitig an wenigstens einer der Blechschalen integriert sein, die sich über einen längeren Bereich des Hohlträger erstrekken. Zu Versteifungszwecken sind auch schon Versteifungsrohre konstanten Querschnitts ins Innere der Hohlträger eingelagert worden, die zwar angenähert dem Verlauf des Hohlträgers folgen, dessen Querschnitt aber nicht vollständig ausfüllen, sondern nur an bestimmten Stellen über Stegbleche oder unmittelbar mit der Wandung des Hohlträgers verbunden sind. Derartige Konstruktionen zur Erhöhung der Steifigkeit eines Hohlträgers sind z.B. an der Mittelsäulen von Pkw-Karosserien für den Fall eines Seitencrash's vorgesehen worden. An den Stoß- oder Verbindungsstellen, also an den Knotenstellen von Hohlträgern ist es meist ebenfalls aus Gewichtsgründen vorteilhaft, eine lokal beschränkte Verstärkung in die Wandung des quer liegenden Hohlträgers zu integrieren.

Früher wurden das Basisblech und das Verstärkungsblech jeweils für sich tiefgezogen und diese Teilwerkstücke anschließend zu einem kompletten Strukturteil zusammengeschweißt, was zwei separate Zieh- und Umformvorgänge, zwei separate Werkzeugsätze und einen gesonderten Fügevorgang von räumlich geformten Blechteilen voraussetzt. Dies alles ist zeitraubend und kostentreibend.

Bei dem aus der DE 43 07 563 A1 bekannten Verfahren zum Herstellen lokal verstärkter Blech-Strukturteile für Kraftfahrzeugkarosserien wird eine das Basisblech des Strukturteils bildende Platine im Flachzustand mit einem kleineren Verstärkungsblech von vorzugsweise höherer Festigkeit lokal, d.h. an einer vorbestimmten Stelle verbunden und dieser weitgehend ebene Blechverbund anschließend gemeinsam in einer Presse tiefgezogen. Das Verstärkungsblech kann selber partiell vorgeformt, z.B. mit Versteiffungssicken versehen sein. Das Verstärkungsblech ist in seinem Umrißverlauf so ausgebildet und wird so auf der Basisblech-Platine positioniert, daß das Verstärkungsblech nach dem Tiefziehen optimal die Krafteinleitungsstelle ausfüllt. Je nach Anwendungsfall kann das Verstärkungsblech eine höhere Festigkeit als das Basisblech aufweisen, wobei hierzu eine größere Wandstärke des Verstärkungsblechs und/oder eine bessere Werkstoffqualität vorgesehen werden kann. Es wird u.U. auch eine mehrlagige Ausbildung des Verstärkungsbleches empfohlen, wobei die mehreren Lagen bevorzugt eine unterschiedliche große Ausdehnung aufweisen.

Als Verbindungstechniken von Basisblech-Platine und Verstärkungsblech werden in der DE 43 07 563 A1 u.a. das Durchsetz- oder Druckfügen (sog. Clinchen) genannt, was als besonders vorteilhaft angesehen wird, weil diese Fügetechnik sich in sich in den Umformvorgang oder in das Anbringen etwaiger Befestigungselemente - Einstanzmutter, Einstanzbolzen - integrieren läßt. Das Verstärkungsblech braucht in diesem Fall u.U. lediglich lagedefiniert nach dem Basisblech in der Umformpresse positioniert zu werden. Daneben werden auch Schweißverbindungstechniken und Klebetechniken genannt, wobei im Zusammenhang mit diesen Verbindungstechniken u.a. hervorgehoben wird, daß sie die Oberfläche des Strukturteiles unbeeinflußt lassen. Es wird in der genannten Druckschrift durchaus erkannt, daß die gegenseitigen Kontaktflächen von Basisblech und Verstärkungsblech vor Korrosion geschützt werden müssen, weil eine spätere Fahrzeuglackierung oder eine Wachs-Konservierung diese Flächen nicht dauerhaft vor dem Zutritt von Feuchtigkeit zu schützen vermögen. Deshalb wird empfohlen, für das Basisblech und das Verstärkungsblech zumindest einseitig verzinkte Bleche zu verwenden, oder stattdessen an der Kontaktstelle eine Schutzfolie aus Kunststoff oder Metall zwischenzufügen. Auch die korrosionsverhindernde Wirkung einer etwaigen Kleberschicht wird hervorgehoben.

Zwar ist gegenüber der zuvor geschilderten Vorgehensweise mit separater Umformung von Basisteil und Verstärkungsteil das aus der DE 43 07 563 A1 bekannte Verfahren wegen der Zusammenfassung des Tiefziehvorgangs in einem einheitlichen Arbeitsgang wesentlich kostengünstiger. Nachteilig ist jedoch zum einen, daß dazu sehr hohe Umformkräfte erforderlich sind, insbesondere wenn das Verstärkungsblech eine höhere Festigkeit aufweist oder gar seinerseits mehrlagig ausgebildet ist. Dies äußert sich in einer entsprechend höheren Beanspruchung und somit in einer höheren elastischen Verformung der Einzelteile der Umformpresse, was wiederum zu einer geringeren Arbeitsgenauigkeit und einer geringeren Lebensdauer der Umformwerkzeuge und der Presse führt. Zwar kann die höhere Beanspruchung bzw. die höhere elastische Verformung der Pressenteile durch eine entsprechende Dimensionierung derselben kompensiert werden, was jedoch die Kosten der Presse erhöht. Der erhöhte Werkzeugverschleiß läßt sich jedoch nicht kompensieren und belastet somit ebenfalls die Stückkosten der hergestellten Strukturteile.

Bei der hier gewürdigten, vorbekannten Technik des gemeinsamen Umformens gepatchter Verbundbleche ist zu beachten, daß die damit erzielbaren Verstärkungsgrade nur beschränkt sind, weil die Umform- und Ziehkräfte für das Verstärkungsblech in dieses in einem wesentlichen Ausmaß nur mittelbar über das Basisblech und über die peripher am Verstärkungsblech angebrachte Verbindungspunkte zwischen Basis- und Verstärkungsblech übertragen werden können. Wenn das Verstärkungsblech, sei es aufgrund der höheren Werkstofffestigkeit, sei es aufgrund der größeren Wandstärke oder aufgrund beider Maßnahmen wesentlich Widerstandsfähiger ist als das Basisblech, so läßt es sich nicht gemeinsam mit dem Basisblech beliebig umformen. Will man lokal besonders hohe Verstärkungsgrade realisieren, so muß man das Basisblech und das Verstärkungsblech jeweils für sich umformen und beide Teile anschließend zu einem Verbundteil miteinander verschweißen.

Ungeachtet des Umstandes, ob das Verstärkungsblech gemeinsam mit dem Basisblech zu einem Strukturteil umgeformt wird, oder ob - wie eingangs erwähnt - das Basisblech und das Verstärkungsblech jeweils für sich geformt und beide Formteile erst anschließend zu dem Strukturteil zusammengefügt werden, ist wegen der aus Gewichtsgründen beabsichtigten Reduzierung der Wandstärke des Basisbleches und der damit ebenfalls reduzierten Korrosionsreserve ein wirksamer Korrosionsschutz an der Kontaktstelle von Basis- und Verstärkungsblech besonders wichtig, um nicht eine reduzierte Lebensdauer des Strukturbauteiles zu riskieren. Ein wirksamer Korrosionsschutz an der Kontaktstelle der Bleche durch das aus der DE 43 07 563 A1 bekannte Verfahren kann selbst durch Zwischenfügen von Korrosionsschutzfolien nicht sicher gewährleistet werden. Durch die punktuellen Verbindungsstellen (Clinch- oder Punktschweißstellen) zwischen Basis- und Verstärkungsblech wird nämlich eine zwischengefügte Korrosionsschutzfolie lokal zerstört, so daß kapillar einkriechende Feuchtigkeit gerade an den Verbindungsstellen zu Korrosion führen und das relativ dünne Basisblech dort mit der Zeit zerfressen kann. Trotz Lackierung und Wachs-Konservierung muß selbst im geschützten Innenbereich von Karosserien aufgrund von Schwitzwasserbildung und aufgrund von Kapillarwirkung mit einem Feuchtigkeitszutritt zu der Kontaktfläche zwischen Basis- und Verstärkungsblech gerechnet werden.

Aufgrund der voranstehenden kritischen Würdigung des bekannten Verfahrens nach der DE 43 07 653 A1 können die systemimmanenten Schwachstellen dieses Verfahrens folgendermaßen zusammengefaßt werden:
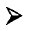 Begrenzte Umformungsgrade der gemeinsam umzuformenden Bleche;
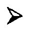 hohes Rückfederungsverhalten der gemeinsam umgeformten Bleche;
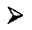 dadurch vergleichsweise geringe Formgenauigkeit der Strukturteile;
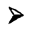 wegen der mittelbaren Übertragung der Umformkräfte in das Verstärkungsblech können nur begrenzte Verstärkungsgrade an den Vertärkungsstellen realisiert werden;
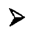 hohe Preßkräfte bei der gemeinsamen Umformung und somit hohe Investitionskosten;
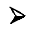 hoher Werkzeugverschleiß und somit Erhöhung der Stückkosten;
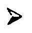 begrenzter Korrosionsschutz an der Fügefläche.

Die DE 195 29 881 C1 offenbart die Herstellung eines Tiefziehteiles aus einem Blech aus härtbarem Federstahl, wobei der Federstahl im Warmzustand des Bleches tiefgezogen und in fertig geformten Zustand durch eine anschließende Wärmebehandlung auf Federstahlhärte gebracht wird, wobei allerdings nicht gesagt wird, wo und wie dies geschieht. Durch eine sich an das Tiefziehen anschließende Wärmebehandlung besteht die Gefahr, daß die Teile sich verziehen und somit einer großen maßlichen und/oder formlichen Streuung unterliegen. Abgesehen davon ist bei lokal stark unterschiedlicher Beanspruchung der Bauteile die Wandstärke auf die Stelle größter Beanspruchung auszulegen, was zu einer Überdimensionierung der Wandstärke an stellen einer geringeren Beanspruchung führt. Zwar wäre es theoretisch denkbar, dieses Umformteil nachträglich lokal durch Einschweißen eines Verstärkungsbleches zu verstärken. Dies wäre aber nicht sinnvoll, da die Härte des Basisbleches und/oder die des Verstärungsbleches sich lokal an den Schweißstellen verlieren würde. Andere Verbindungstechniken wie Löten, Kleben oder Clinchen würden bei der hohen Festigkeit der beteiligten Bleche sinnvoller Weise ausscheiden, weil diese Verbindungstechniken nicht ohne Beeinträchtigung des Basisbleches und/oder des gehärteten Werkstoffgefüges machbar wären (Löten, Clinchen) oder weil sie nicht die erforderliche Festigkeit bringen würden (Kleben). Die Verbindungsstellen müßten zumindest annähernd die gleiche Festigkeit wie die des gehärteten Basisbleches aufweisen, um den gewünschten Verstärkungseffekt des eingelagerten Bleches zu erzielen. Das bekannte Verfahren nach der DE 195 29 881 C1 weist also folgende Schwachstellen auf, wobei z.T. auf die Ausführungen zu der eingangs genannten Literaturstelle zu verweisen ist:
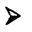 Wegen einheitlicher Wandstärke nur begrenzter Leichtbau möglich;
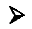 keine lokalen Verstärkungen möglich;
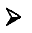 wegen der Wärmebehandlung vergleichsweise geringe Formgenauigkeit der Strukturteile.

Aufgabe der Erfindung ist es, das gattungsgemäß zugrunde gelegte Herstellungsverfahren hinsichtlich folgender Kriterien zu verbessern:
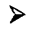 Bezüglich des Verfahrenserzeugnisses dahin, daß höhere lokale Verstärkungsgrade im Vergleich zum Basisblech bzw. zum unverstärkten Bauteil in einem einheitlichen Fertigungsschritt erreichbar sind.
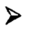 Bezüglich des Verfahrensergebnisses dahin, daß einer größere Arbeitsgenauigkeit der Umformteile als bisher erreichbar ist.
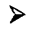 Bezüglich der verfahrensausübenden Mittel dahin, daß die Umformwerkzeuge und die Umformpresse geringer als zu erwarten beansprucht werden und in soweit eine vertretbare Lebensdauer zu erwarten ist.

Diese Aufgabe wird bei Zugrundelegung des gattungsgemäßen Verfahrens erfindungsgemäß durch die kennzeichnenden Merkmale von Anspruch 1 gelöst. Danach wird das gepatchte Verbundblech erfindungsgemäß im Warmzustand in die gewünschte Form umgeformt und auf dem Umformwerkzeug unter mechanischer Aufrechterhaltung des Umformungszustandes definiert abgekühlt.

Erfindungsgemäß wird ein kostengünstiger Weg für ein neues Leichtbaukonzept eröffnet. Zur Erläuterung dessen sei zunächst daran erinnert, daß ein geringes Gewicht einer Karosserie wesentlich die Leistungsfähigkeit (Fahrspaß) und den Kraftstoffverbrauch des Fahrzeuges (Kostenniveau) mitbestimmen und somit unmittelbar dem Kundennutzen dienen. Auf der anderen Seite soll eine Fahrzeugkarosserie aus Gründen einer hohen Insassensicherheit im Bereich der Fahrgastzelle möglichst steif sein, was sich tendenziell in Richtung schwererer Karosserie auswirkt. Diese beiden gegenläufigen Forderungen bezüglich des Gewichts stehen im übrigen in einer direkten Beziehung zu den Kosten der Karosserie. Die Kosten auf der einen Seite und das Gewicht auf der anderen Seite entwickeln sich tendenziell einander entgegenlaufend; je leichter eine Karosserie konzipiert ist, um so teurer nur läßt sie sich in der Regel herstellen, wogegen eine Karosseriekonstruktion, welche das Spektrum der verfügbaren Leichtbaumaßnahmen weniger ausschöpft, kostengünstiger herstellbar ist. Mit der erfindungsgemäßen Warmumformung von Strukturteilen aus Stahl werden jedoch in diesem Beziehungsgeflecht zwischen Funktion, Kosten und Gewicht einer Karosserie neue Randbedingungen gesetzt, die Leichtbau zu mäßigen Kosten bei gleichzeitiger Funktionssteigerung erlauben. Die Potentiale und Vorteile der erfindungsgemäßen Herstellungsweise liegen in folgendem:
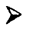 Es wird ein kostengünstiger Leichtbau ermöglicht.
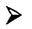 Es können Werkstoffe mit hoher und höchster Festigkeit eingesetz werden. Die erreichbare Werkstofffestigkeit kann gegenüber herkömmlichen Maxilmalwerten auf etwa das Dreifache gesteigert werden.
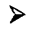 Trotz Einsatz hochfester Werkstoffe können ohne weiteres hohe Umformgrade realisiert werden.
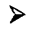 Es können innerhalb weiter Grenzen beliebige Verstärkungsgrade des Basisbleches realisiert werden.
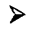 Die konventionelle Blechschalenkonstruktion und das damit zusammenhängende Konstruktions- und Reparatur-Know-how können beibehalten werden. Letzterem kommt eine hohe infrastrukturelle Bedeutung zu.
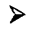 Soweit Verstärkungen noch erforderlich werden, können diese in die eine Schale und in deren Herstellung integriert werden.
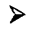 Aufgrund der Warmumformung ist das Rückfederungsverhalten der Blechteile nach dem Umformprozeß vernachlässigbar gering, was die Fertigungsgenauigkeit erhöht. Es können ohne weiteres geringe Fertigungstoleranzen realisiert werden.
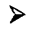 Der Abstimmungsaufwand zwischen Umformwerkzeug und den Strukturteilen ist nicht höher, eher geringer als beim Umformen von einfachen Blechteilen.
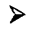 Die Kosten für Anlagen- und Werkzeuginvestitionen, für erforderliche Maschinenstunden sowie für Logistik und Lagerhaltung werden reduziert.

In dieser Auflistung von erfindungsgemäßen Vorteilen sind einige enthalten, die einen synergetischen Überschuß gegenüber einer Summe von aus unterschiedlichen Quellen des Standes der Technik zusammengenommenen Vorteilen darstellen, und zwar sind als synergetische Vorteile folgende besonders hervorzuheben:
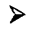 Trotz Einsatz hochfester Werkstoffe können ohne weiteres hohe Umformgrade realisiert werden.
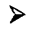 Es können innerhalb weiter Grenzen beliebige Verstärkungsgrade des Basisbleches realisiert werden.
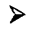 Aufgrund der Warmumformung ist das Rückfederungsverhalten der Blechteile nach dem Umformprozeß vernachlässigbar gering, was die Fertigungsgenauigkeit erhöht. Es können ohne weiteres geringe Fertigungstoleranzen realisiert werden.

Um die hergestellten Strukturteile im Kontaktbereich zwischen Basis- und Verstärkungsblech wirksamer gegen Korrosion schützen zu können, wird in zweckmäßiger Ausgestaltung der Erfindung vor dem Anbringen des Verstärkungsbleches an dem Basisblech die Kontaktfläche wenigstens eines der Bleche flächendeckend mit einem Hartlot versehen, wobei vorteilhafterweise beide Kontaktflächen zuvor gereinigt werden. Während des Erwärmens des gepatchten Blechverbundes auf Umformtemperatur, was vorzugsweise in einer Schutzgasatmosphäre eines Ofens erfolgt, wird das aufgetragene Hartlot erschmolzen. Während des Umformprozesses wird aufgrund der Verformung und des Zusammenpressens der Blechteile eine innige und porenfreie Lötverbindung erzeugt. Das die Kontaktzone flächendeckend ausfüllende Hartlot verhindert später zuverlässig einen Feuchtigkeitszutritt und bietet einen hochwirksamem Korrosionsschutz. Das Hartlot wird vorzugsweise mit einem Überschuß aufgetragen, der während des Umformens am Rand des Verstärkungsbleches ausgepreßt wird. Durch das Löten wird der Schritt des Verbindens von Verstärkungsblech und Basisblech ohne weiteres in den Umformprozeß integriert. Es muß lediglich, z.B. durch einen einzigen, nach dem Lotauftrag aber vor dem Erwärmen gesetzten Verbindungspunkt zwischen Verstärkungsblech und Basisblech, sichergestellt werden, daß Verstärkungsblech und Basisblech während des Handhabens ihre gegenseitige Soll-Lage eindeutig beibehalten und nicht etwa zueinander verrutschen können.

Weitere zweckmäßige Ausgestaltungen der Erfindung können den Unteransprüchen entnommen werden; im übrigen ist die Erfindung anhand verschiedener in der Zeichnung beispielsweise dargestellter Verfahrensschemata und Details nachfolgend noch erläutert; dabei zeigen:
- Figuren 1a und 1b: zusammengenommen ein Verfahrensschema gemäß einem ersten Ausführungsbeispiel einer gemeinsamen Warmumformung von Basisblech und Verstärkungsblech, bei dem letzteres mit dem Basisblech hartverlötet wird,
- Fig. 2: einen partiellen Schnitt durch das zwangsgekühlte Umformwerkzeug nach Figur 1 in einer vergrößerten Darstellung,
- Fig. 3: einen Querschnitt durch ein weiteres Ausführungsbeispiel eines gepatchten Verbundbleches, bei dem das mit Verstärkungssicken versehene Verstärkungsblech vor dem Zusammenbringen mit dem Basisblech vorgeformt ist,
- Fig. 4: ein nur partiell dargestelltes, weiteres Verfahrensschema zur Warmumformung von Basis- und Verstärkungsblech, bei dem diese nach dem gemeinsamem Warmumformen stufenweise in einer Folge von zwangsgekühlten Fixierwerkzeugen gekühlt werden und
- Fig. 5: ein Temperatur/Zeit-Diagramm, in dem der Temperaturverlauf während der Herstellung eines in der Verfahrensanlage nach Figur 4 hergestellten Umformteiles dargestellt ist.

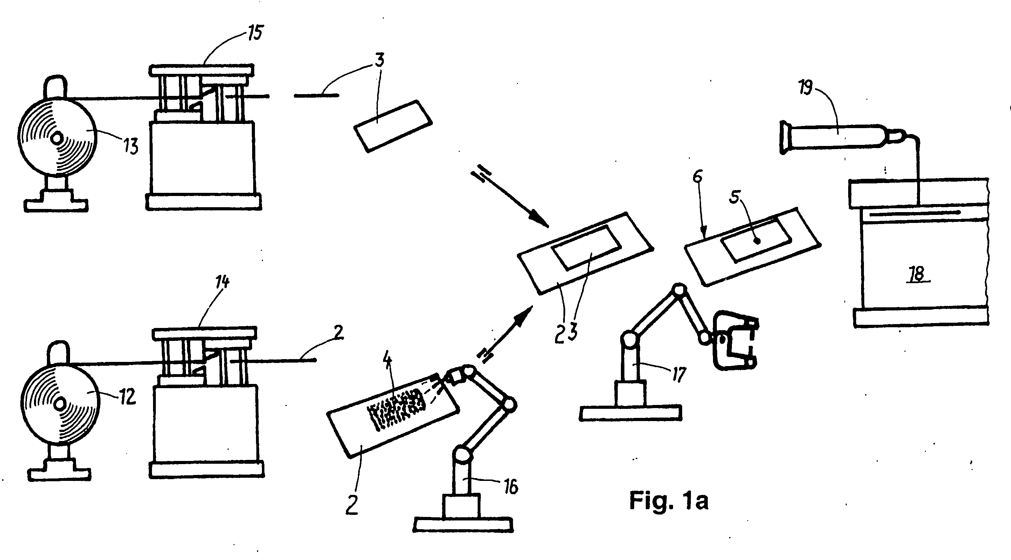

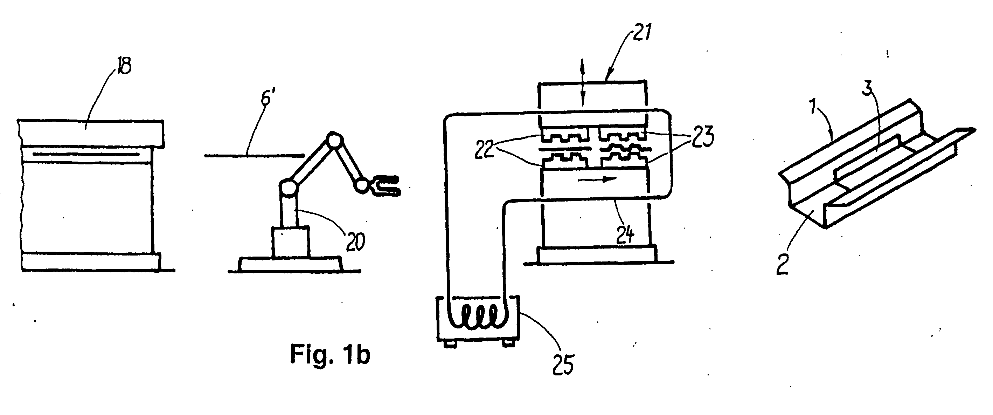

Das in den Figuren 1a und 1b gemeinsam dargestellte Verfahrensschema dient zum Herstellen eines räumlich geformten Strukturteils 1, welches aus einem Basisblech 2 und aus einem kleineren, lokal angeordneten Verstärkungsblech 3 besteht. Dabei wird das Basisblech 2 des Strukturteils im Flachzustand mit dem Verstärkungsblech 3 an der für die spätere Verstärkungsstelle vorbestimmten Stelle verbunden und die Teile des so gepatchten Verbundblechs 6 werden anschließend mittels eines öffen- und schließbaren Umformwerkzeuges 22 in einer Umformpresse 21 gemeinsam umgeformt.

Um das Herstellungsverfahren hinsichtlich Verfahrenserzeugnis und -ergebnis zu verbessern sowie bezüglich der verfahrensausübenden Mittel zu entlasten, wird das gepatchte Verbundblech 6 erfindungsgemäß vor dem gemeinsamen Umformen auf eine oberhalb der Umformtemperatur des Werkstoffs liegende Temperatur erwärmt, im Warmzustand bei mäßiger Werkzeugbeanspruchung in die gewünschte Form umgeformt und anschließend unter mechanischer Fixierung des gewünschten Umformzustandes in dem geschlossen gehaltenen Umformwerkzeug 22 und/oder in einem anschließenden Fixier- und Beschneidewerkzeug 23 definiert abgekühlt und dadurch gezielt wärmebehandelt.

Die in den Figuren 1a und 1b schematisch dargestellte Anlage sieht zur Ausübung des erfindungsgemäßen Verfahrens je eine Abwickelvorrichtung für ein Coil 12 für das Basisblech und für ein Coil 13 für das Verstärkungsblech vor. Die abgewickelten Bleche werden nach einem Geraderichten derselben in einer Hubschere 14 bzw. 15 in einzelne Basisblech-Platinen 2 und in einzelne Verstärkungsblech-Platinen 3 zerteilt, die taktweise weiterverarbeitet werden. Die beiden Coils 12 und 13 sind entsprechend der unterschiedlichen Breite der Zuschnitteile 2 bzw. 3 unterschiedlich breit. Die Dicke der einzelnen Bleche hängt von der Belastung des Strukturteils im unverstärkten Bereich des Basisbleches einerseits und dem gewünschten Verstärkungseffekt andererseits ab und ist für jeden Einzelfall zu optimieren. Meist wird das Verstärkungsblech dünner als das Basisblech sein. Es sind aber auch ohne weiteres Fälle mit hoher lokaler Verstärkung vorstellbar, bei denen das Verstärkungsblech dicker als das Basisblech ist. Hier mag sich u.U. eine mehrlagige Verstärkung aus zwei übereinander gelegten, unterschiedlich großen Verstärkungsblechen als sinnvoll erweisen, bei der die Verstärkung von ihrem Außenrand her entsprechend der Lagenzahl stufenweise ansteigt.

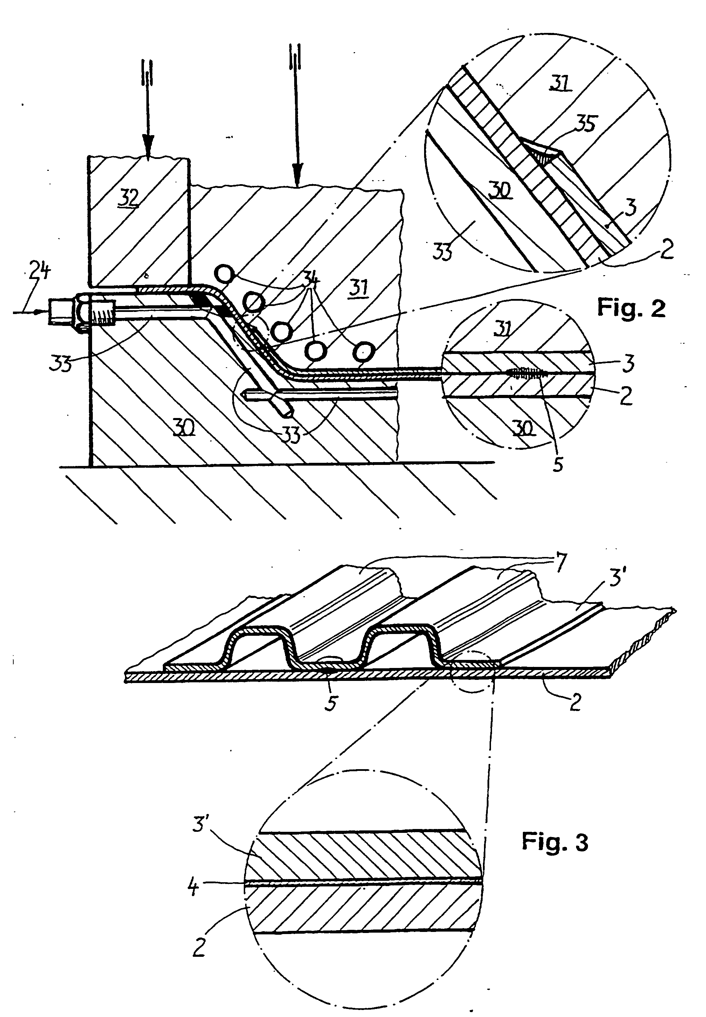

Im Zusammenhang mit der Steifigkeit des Verstärkungsbleches sei an dieser Stelle bereits darauf hingewiesen, daß diese nicht nur durch Werkstoffestigkeit Blechdicke und/oder Lagenzahl beeinflußt werden kann, sondern auch durch eine geeignete strukturelle Versteifung. Gemäß der Darstellung nach Figur 3 kann das Verstärkungsblech 3' nämlich seinerseits vor dem Zusammenbringen mit dem Basisblech 2 durch Anbringen von Verstärkungssicken 7 in der Weise vorgeformt und dadurch strukturell ausgesteift sein. Hierbei muß jedoch dafür gesorgt werden, daß sich das vorgeformte Verstärkungsblech 3' gleichwohl an der vorbestimmten Stelle formgetreu an das Basisblech 2 anlegen und mit ihm fixieren läßt.

Was den Werkstoff anlangt, so können beide Bleche vorzugsweise aus dem gleichen oder einem ähnlichen Werkstoff bestehen. Nachfolgend werden zwei unterschiedliche, an sich bekannten und für Tiefziehbleche im Handel erhältlichen Werkstoffe vorgeschlagen, die für das Basisblech 2 und/oder das Verstärkungsblech 3, 3' in Frage kommen können. Und zwar sei in diesem Zusammenhang zum einen ein wasserhärtender Vergütungsstahl der deutschen Firma Benteler AG genannt, der unter der Handelsbezeichnung BTR 165 vertrieben wird. Dieser Stahl weist die nachfolgend aufgeführten Legierungszusammensetzung auf, wobei die zusätzlich zu dem Basismetall Eisen hinzuzufügenden Gehalte der Legierungspartner in Gewichtsprozent zu verstehen sind:

| | |
|---|---|
| Kohlenstoff | 0,23 - 0,27 %, |
| Silizium | 0,15 - 0,50 %, |
| Mangan | 1,10 - 1,40 %, |
| Chrom | 0,10 - 0,35 %, |
| Molybdän | 0 - 0,35 %, |
| Titan | 0,03 - 0,05 %, |
| Aluminium | 0,02 - 0,06 %, |
| Phosphor | max. 0,025 %, |
| Schwefel | max. 0,01 % und |
| andere insgesamt | 0,0020 - 0,0035 %. |

Zum anderen wird auch ein gegen Korrosion anorganisch vorbeschichtetes Blech der französischen Firm Sollac SA empfohlen, den diese unter der Handelsbezeichnung 22MnB5 vertreibt. Die anorganische Vorbeschichtung des Bleches - eine Aluminium/Silizium-Beschichtung, die bei der Wärmebehandlung unter Bildung eines dreiphasigen Schichtstoffes Al/Si/Fe in den Basiswerkstoff teilweise hineindiffundiert - verhindert eine Verzunderung und eine Entkohlung des Bleches bei der Erwärmung und macht ein Beizen und ein Phosphatieren des Bleches unnötig. Die Beschichtung läßt ohne weiteres die üblichen Schweißungen zu. Das unbeschichtete Blech besteht aus einem Stahl mit der nachfolgend aufgeführten Legierungszusammensetzung, wobei die Gehalte ebenfalls in Gew.-% zusätzlich zu dem Basismetall Eisen zu verstehen sind:

| | |
|---|---|
| Kohlenstoff | 0,20 - 0,25 %, |
| Silizium | 0,15 - 0,35 %, |
| Mangan | 1,10 - 1,35 %, |
| Chrom | 0,10 - 0,35 %, |
| Titan | 0,02 - 0,05 %, |
| Schwefel | max. 0,008 % und |
| andere insgesamt | 0,002 - 0,004 %. |

Das in den Figuren 1a und 1b dargestellte Verfahrensschema sieht eine Hartlötverbindung der beiden Zuschnitteile vor. Deshalb werden bei dem in Figur 1a gezeigten Ausführungsbeispiel die Basisblech-Platinen 2 lokal an einer vorbestimmten Fläche durch einen Auftragsroboter 16 mit einem Hartlotauftrag 4 versehen, der beispielsweise in Form einer sprühfähigen Paste aufgetragen wird. An dieser stelle sei gleich vermerkt, daß auch andere Formen des Hartlotauftrags, z.B. das Auflegen eines formentsprechend ausgestanzten Zuschnittes einer Lötfolie oder das Aufstreuen oder Auflegen von Spänen denkbar ist. Für den Fall einer Hartlötverbindung der Blechteile kann es u.U. ferner vorteilhaft sein, wenn die Kontaktflächen sowohl des Basis- als auch des Verstärkungsbleches vor dem Auftragen mit Hartlot 4 gereinigt und/oder für ein Hartlöten aktiviert werden, was in Figur 1a jedoch nicht dargestellt ist. Ferner sei der Vollständigkeit halber erwähnt, daß das Hartlot zusätzlich oder alternativ auch auf der Kontaktfläche des Verstärkungsbleches 3 aufgetragen werden kann. Zweckmäßigerweise wird das Hartlot 4 mit einem gewissen Überschuß aufgetragen, so daß dieser nach dem Erschmelzen des Hartlotes beim gemeinsamen Warmumformen der Blechteile am Rand des Verstärkungsbleches 3 ausgepreßt werden kann; vgl. Figur 3 und den dort am Rand ausgepreßten Lotüberschuß 35. Dieses Auspressen von Hartlotüberschuß beseitigt nicht nur Gaseinschlüsse und schafft somit eine porenfreie Lötfuge, sondern durch den am Rand sich sammelnden und dort als Meniskus anstehenden Überschuß 35 wird der Rand des Verstärkungsbleches wirkungsvoll versiegelt und der stufenförmige Übergang zum Basisblech bezüglich Wanddicke und Kerbwirkung etwas abgemildert.

Nach dem Hartlotauftrag werden die Blechteile 2 und 3 entsprechend der gewünschten gegenseitigen Soll-Lage der Bleche lagedefiniert aufeinandergelegt, was durch eine Hilfsvorrichtung rationell und zuverlässig durchgeführt werden kann. Anschließend werden beide Bleche mittels des Schweißroboters 17 durch vorzugsweise nur einen einzigen Heftpunkt 5 vorläufig aufeinander fixiert, um die Relativlage der Blechteile zu sichern.

Das solcherart gepatchte Verbundblech 6 wird automatisiert in einen Durchlaufofen 18 eingegeben, dessen Ofenatmosphäre durch gezielte und ausreichende Zugabe eines Schutzgases z.B. aus der Gasflasche 19 inertisiert ist, um ein Verzundern nicht beschichteter Schnittstellen der Bleche oder - bei Verwendung unbeschichteter Bleche - an der gesamten Blechoberfläche zu verhindern. Bei dem Schutzgas kann es sich beispielsweise um Kohlendioxid und/oder um Stickstoff handeln. In dem Ofen wird das Verbundblech oberhalb einer solchen Gefügeumwandlungstemperatur des Werkstoffes - meist eine bestimmte Temperatur innerhalb des Temperaturbereiches zwischen 850 und 930°C - erwärmt, oberhalb der das Werkstoffgefüge in austenitischem Zustand vorliegt. Dadurch ist eine Wärmebehandlung des Werkstoffes durch gezielte Abkühlung und somit eine Einstellung der dadurch erzielbaren Werkstoffestigkeit möglich.

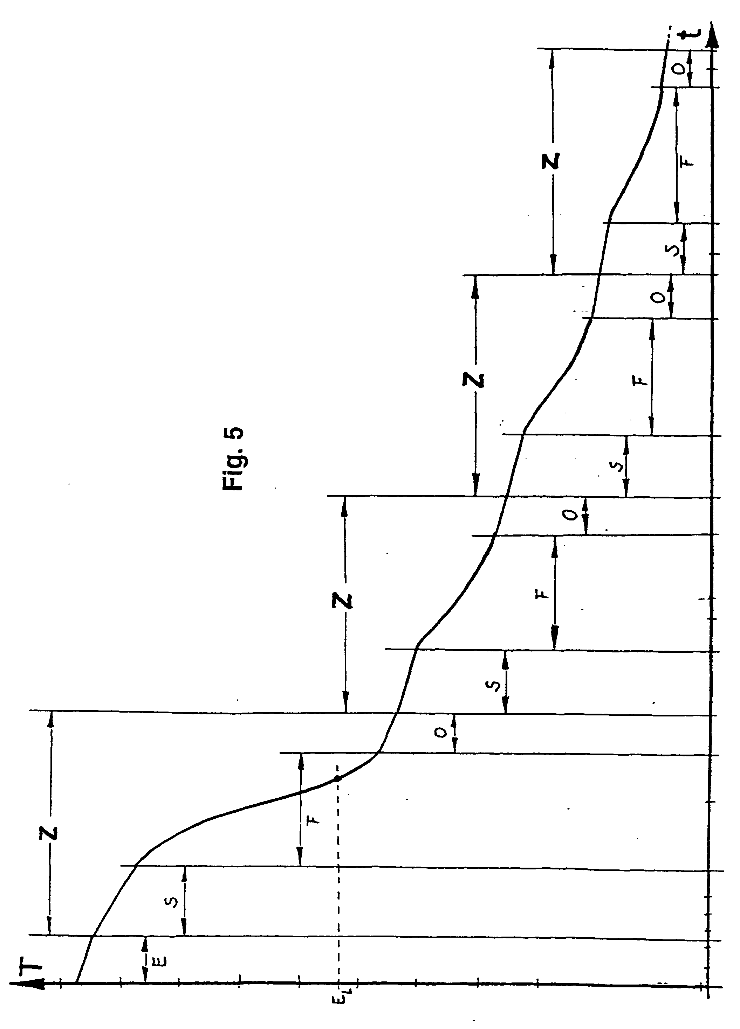

Das Beschicken des Durchlaufofens kann beispielsweise durch für Öfen bekannte, automatisierte Beschickungseinrichtungen erfolgen, wobei für eine greifgerechte, definierte Lage der Verbundbleche im Ofen und eine durch einen Rost unterstützte, verzugsfreie, nahezu vollflächige Flachlage der Bleche zu sorgen ist. Wegen des raschen Übergebens der erwärmten Verbundbleche 6' vom Ofen in ein Umformwerkzeug ist hingegen für das Entnehmen des Verbundblechs aus dem Ofen 18 ein Handhabungsroboter 20 vorgesehen. Dieser ergreift das lagedefiniert bereit liegende, erwärmte Verbundblech 6' im Ofen an vorbestimmten Stellen und legt es unmittelbar anschließend und rasch ebenso lagedefiniert in das geöffnete Umformwerkzeug 22 ein. Diese bis zum Beginn des Schließens des Umformwerkzeuges 22 gemessene Zeitspanne dauert nur wenige Sekunden. Das Einlegen ist also vorzugsweise in weniger als zwei Sekunden abgeschlossen, siehe die Zeitspanne E (Einlegen) in Figur 5 zu Beginn des Prozesses, so daß die dadurch bedingte Abkühlung des Werkstücks nur gering ist und durch Wahl einer entsprechend höheren Ofentemperatur vorgehalten werden kann.

Das Umformwerkzeug 21 besteht bei dem in Figur 2 näher dargestellten Ausführungsbeispiel im unteren feststehenden Teil aus einer Matrize 30 mit einem ortsfesten Niederhalterrand, der sich in der Regel in einer Ebene, meist sogar in einer horizontalen Ebene erstreckt. Der obere, hubbewegliche Teil des Umformwerkzeuges besteht aus einer Patrize 31 mit einem gesondert hubbeweglich antreibbaren Niederhalter 32, dessen ebene Anlagefläche parallel zum Niederhalterrand der Matrize angeordnet ist. Beim Einlegen des erwärmten Verbundbleches 6' in das geöffnete Umformwerkzeug liegt das Verbundblech zunächst lediglich außen am Niederhalterrand der Matrize auf und überspannt frei die Gravur derselben. Beim Schließen des Werkzeuges legt sich als erstes der Niederhalter 32 an den Rand des Verbundbleches an und klemmt diesen mit vorgebbarer Klemmkraft so ein, daß der Rand unter einer bestimmten Zugkraft aus der Einklemmung herausgleiten kann. Erst nach der so bewirkten Randeinklemmung durch den Niederhalter 32 setz auch die Patrize auf das Verbundblech ein, so daß der Umformvorgang beginnt.

Beim Warmumformen sollte der Niederhalter 32 isoliert ausgeführt werden. Bevorzugt wird das Warmumformen jedoch ohne Niederhalter durchgeführt, da dadurch ein zu schnelles Abkühlen des Blechs vermieden wird.

Durch das anhaltende Niedergehen der Patrize 31 werden die Blechteile des eingelegten, erwärmten Verbundblechs 6' gemeinsame umgeformt. Trotz der hohen gemeinsamen Blechstärke sind wegen des Warmzustandes des Verbundblechs die von der Umformpresse 21 aufzubringenden Kräfte zum einen und die auf der Oberfläche des Umformwerkzeuges wirksamen Reibungskräfte zum anderen vergleichsweise gering. Es kann also mit einer herkömmlichen Pressenkonstruktion für übliche Tiefziehvorgänge und von üblichem Kostenniveau gearbeitet werden.

Das zwar lagesicher aber praktisch nur lose auf dem Basisblech 2 aufliegende Verstärkungsblech 3 läßt sich in der Regel auch ohne Zug faltenfrei in die gewünschte Form bringen. Dies ist insbesondere dann der Fall, wenn - wie meist gegeben - die zu verstärkenden Zonen des Strukturteils einen räumlich nur wenig gekrümmten Verlauf haben. Die Zeitspanne S (siehe Figur 5) für das Schließen des Umformwerkzeuges und für das Umformen selber, gerechnet vom Beginn des Schließens des Umformwerkzeuges 22 an bis zum vollständigen Umformen des Verbundbleches, erfolgt recht zügig und im unmittelbaren Anschluß an das Einlegen des Verbundbleches. Diese wesentliche Phase ist in wenigstens 3 bis 5 Sekunden abgeschlossen. Zwar ist aufgrund der teilweisen Berührung des Verbundbleches mit der Gravur des Umformwerkzeuges der Wärmeverlust im Verbundblech an den Berührungsstellen lokal in dieser Zeitspanne größer als während der Einlegephase, wo das Verbundblech - abgesehen von der heißen Greifzange des Handhabungsroboters - nur mit Umgebungsluft in Berührung gelangt. Jedoch berührt die Gravur der unteren Matrize 30 das Verbundblech zunächst noch gar nicht, sondern erst ganz am Schluß des Umformprozesses. Darüber hinaus berührt die obere Patrize 31 das Verbundblech zunächst nur partiell und in den Bereichen, in denen der Umformungsgrad in der Regel ohnehin vergleichsweise nur gering ist. In den nicht oder noch nicht von der Gravur berührten Bereichen ist das erwärmte Verbundblech von stagnierender Luft umschlossen und in sofern gegen Wärmeverluste sogar isoliert. Jedenfalls kühlt das Verbundblech während der Umformphase nur mäßig ab und läßt sich trotz der teilweisen Berührung mit der Gravur des Umformwerkzeuges ohne weiteres bei geringen Kräften und in hohem Maße warmumformen. Neben der Entlastung der Presse und des Umformwerkzeuges liegt ein weiterer wesentlicher Vorteil der Warmumformung darin, daß wesentlich höhere Umformungsgrade des Verbundbleches (im Vergleich zur Kaltumformung) in einem einzigen Umformungszug durchgeführt werden können.

Nachdem durch das Schließen des Umformwerkzeuges die Teile des Verbundblechs im Warmzustand gemeinsam in die gewünschte Form gebracht worden sind, wird das geformte Verbundblech im unmittelbaren Anschluß darauf abgekühlt, wobei das Verbundblech während dieser Abkühlzeit in dem gewünschten Umformungszustand mechanisch fixiert wird. Durch das Abkühlen wird nicht nur das Hartlot erstarrt, wodurch die Lörverbindung bereits jetzt schon belastbar ist, sondern durch ein definiertes Abkühlen wird der verwendete Werkstoff vor allem gezielt wärmebehandelt und dementsprechend eine bestimmte Werkstoff-Festigkeit in ihm eingestellt. Darüber hinaus wird durch das mechanische Fixieren des umgeformten Bleches während der Abkühlung in dem gewünschten Sollzustand die Lötfuge in der Erstarrungsphase des Hartlotes geschlossen gehalten und ferner der Umformungszustand des Verbundbleches trotz der Wärmebehandlung nicht nur formgetreu und zuverlässig stabilisiert, sondern eine Rückfederungstendenz beseitigt. Im Ergebnis werden dadurch sehr genaue Werkstücke mit geringer maßlicher und/oder formlicher Streuung produziert.

Um ein gezieltes Abkühlen des umgeformten Verbundbleches in dem Umformwerkzeug zu ermöglichen, sind gemäß der Darstellung nach Figur 2 die Gravuren der Matrize 30 und der Patrize 31 mit oberflächennah verlaufenden Kühlkanälen 33 bzw. 34 versehen, die in einen Kühlkreislauf 24 einbezogen sind, dessen Kühlmittel zwangsweise durch eine nicht dargestellte Pumpe zirkuliert werden kann. Das erwärmte Kühlmittel kann durch einen im Kühlkreislauf integrierten Wärmetauscher 25 wieder zurückgekühlt werden, wobei die hierbei eingesetzte Kälteenergie beispielsweise durch ein Kälteaggregat oder durch kaltes Brauchwasser aus einem geeigneten Vorfluter (Wasserleitung, Fluß) aufgebracht werden kann. Die Kühlkanäle 33 der Matrize einerseits und die Kühlkanäle 34 der Patrize andererseits sind beim dargestellten Ausführungsbeispiel kreuzweise zueinander angeordnet, um möglichst keinen Streifeneffekt beim Kühlen auf dem Werkstück zu hinterlassen.

Aus nachfolgend klar werdenden Gründen erfolgt bei dem im Verfahrensschema nach den Figuren 1a, 1b dargestellten Beispiel die Kühlung in zwei aufeinander folgenden Etappen. Die erste Abkühlphase erfolgt durch Kontaktierung mit der zwangsgekühlten Gravur des Umformwerkzeuges 22 selber, wobei für die Zieltemperatur dieser ersten Abkühlphase zwei Überlegungen maßgebend sind. Zum einen muß bei der Hartlotverbindung der Bleche im Verbund das zunächst erschmolzene Hartlot unter mechanischer Fixierung des geformten Verbundbleches wenigsten bis zur vollständigen Erstarrung des Hartlotes 4 abgekühlt werden, wobei diese Erstarrung beliebig schnell oder beliebig langsam herbeigeführt werden kann. Zum anderen soll durch eine Wärmebehandlung eine bestimmte Werkstofffesttigkeit erreicht werden, wofür bei den in Frage kommenden Stählen eine Zieltemperatur von 500°C sowie eine bestimmte Abkühlgeschwindigkeit maßgebend ist. Deswegen ist es wichtig, daß das gepatchte Verbundblech nach dem gemeinsamen Umformen unter Verbleib in dem geschlossen gehaltenen Umformwerkzeug 22 zumindest bis auf etwa 500°C abgekühlt wird. Ferner ist es wichtig, daß nicht nur der Schmelzpunkt, sondern vor allem der Erstarrungspunkt, d.h. die Solidustemperatur, des verwendeten Hartlotes deutlich über 500°C liegt.

Im Zusammenhang mit der einzuhaltenden Abkühlgeschwindigkeit gilt folgendes: Ein martensitisches Werkstoffgefüge im umgeformten Verbundblech kann dann sinnvoll sein, wenn man höchste Festigkeit im Strukturteil benötigt und keine oder nur eine sehr geringe Duktilität gefordert wird. In so einem Fall muß das warm umgeformte Verbundblech im Temperaturbereich zwischen 800 und 500°C rasch, d.h. von 800 auf 500°C in weniger als vier Sekunden abgekühlt werden.

Mit Rücksicht auf ein gutes Versagensverhalten der Strukturteile im Crash-Fall strebt man jedoch meist eine vergleichsweise hohe Festigkeit verbunden mit hoher Duktilität des Werkstoffes an. In diesem Fall ist ein bainitisches Werkstoffgefüges im umgeformten Verbundblech anzustreben. Zu diesem Zweck muß das Werkstück im Temperaturbereich zwischen 800 und 500°C vergleichsweise langsam, nämlich von 800 auf 500°C in einer länger als vier Sekunden dauernden Zeitspanne abgekühlt werden.

An sich wäre es denkbar, das Werkstück unter Verbleib im Umformwerkzeug und unter Aufrechterhaltung des Fixierungszustandes weiterhin abzukühlen bis auf eine Temperatur, bei der die Werkstücke ohne weiteres, insbesondere ohne unkontrollierte Gefügeveränderungen handhabbar und/oder lagerbar sind. Die dazu insgesamt erforderliche Abkühlzeit beträgt bei guter Auslegung der werkzeug-integrierten Kühlung, je nach Blechdicke, Werkstückgröße und Endtemperatur etwa 20 - 40 Sekunden, wobei das Gros der Fälle im Bereich 25 - 30 Sekunden liegen wird. In einer Pilotphase der Fertigung oder bei kleinen Losgrößen ist eine solche einstufige Abkühlung zweifellos zweckmäßig. Meist werden derartige Strukturteile jedoch in großen Stückzahlen benötigt und es muß eine rationelle Massenfertigung aufgestellt werden. Unter dieser Voraussetzung ist es zweckmäßig, die Werkstücke mehrstufig, mindesten aber zweistufig abzukühlen.

Demgemäß sieht das Verfahrensschema nach Figur 1b eine zweistufige Abkühlung vor, die den Vorteil hat, daß der notwendige Beschneidungsvorgang des Werkstücks noch bei einer erhöhten Temperatur von etwa 500°C vorgenommen werden kann, was insbesondere bei erhöhten Werkstoffestigkeiten eine erhebliche Entlastung der Schneidwerkzeuge bedeutet. Zum anderen hat eine zweistufige Abkühlung den Vorteil, daß das Umformwerkzeug schneller zur Aufnahme eines neuen Verbundbleches wieder frei wird, die Taktzeit also verkürzt und die Fertigung rationaloisiert wird.

Bei der zweistufigen Abkühlung wird das gepatchte Verbundblech nach dem gemeinsamen Umformen unter Verbleib in dem geschlossen gehaltenen Umformwerkzeug 22 zunächst auf etwa 500°C bei einem bestimmten, zeitlichen gemittelten Temperaturgradienten abgekühlt und anschließend in ein innerhalb der Umformpresse benachbartes, öffen- und schließbares Fixierwerkzeug 23 übergeben. Die beiden benachbarten Werkzeuge, nämlich das Umformwerkzeug 22 zum einen und das Fixierwerkzeug 23 zum anderen, sind innerhalb der Umformpresse 21 nach Art von Stufenwerkzeugen angeordnet und durch eine an sich bekannte Transfereinrichtung verbunden, die beim Öffnen der Presse die Werkstücke aus den benachbarten Werkzeugen synchron heraushebt und sie ins nächste Werkzeug bzw. in eine außerhalb der Presse angeordnete Ablage weiter reicht.

Das in dem Fixierwerkzeug aufgenommene Verbundblech wird darin im geschlossen Zustand ebenfalls mittels einer formgetreuen Gravur beidseitig flächig berührt und so der gewünschten Umformzustand des Verbundbleches weiterhin mechanisch fixiert. In das Fixierwerkzeug 23 ist ein nicht näher dargestelltes Beschneidungswerkzeug integriert, mit dem das umgeformte Verbundblech in dem vorliegenden Warmzustand beschnitten wird. Und zwar wird der nun nicht mehr benötigte Niederhalte- bzw. Ziehrand des Basisbleches abeschnitten. Die dazu erforderliche Beschneideeinrichtung ist an sich bekannt und nicht mit dargestellt. Die Gravur des Fixierwerkzeuges ist ebenfalls durch oberflächennah integrierte Kühlkanäle zwangsgekühlt, so daß dem mechanisch formfixierten Werkstück weiterhin durch Kontaktierung Wärme entzogen werden kann. Zur Vermeidung eines Streifeneffektes bei der Abkühlung ist es zweckmäßig, die oberseitigen und die unterseitigen Kühlkanäle auch beim Fixierwerkzeug zueinander gekreuzt anzuordnen. Bei dem Fixier- und Beschneidewerkzeug braucht die bereits vorhandene Werkstückform nur noch mechanisch gesichert zu werden, es finden also keine Umform- und Reibungsvorgänge unter Krafteinwirkung an der Oberfläche der Fixierwerkzeuge statt. Deshalb kann das Fixierwerkzeug als Leichtkonstruktion ausgebildet sein und aus einem weniger festen Werkstoff, z.B. aus Aluminium bestehen. Insbesondere braucht die Oberfläche des Fixierwerkzeuges nicht geschlossen zu sein. Vielmehr kann durch Integration eines Rasters von zur Werkzeugoberfläche hin offenen Kanälen das Werkstück unmittelbar mit einem Kühlfluid, insbesondere mit Kühlluft beaufschlagt werden. Durch Beimischen von Wassernebel und/oder flüssiger Luft zur Kühlluft können auch mit Luft als Wärmeträgermedium ganz erhebliche Abkühlraten erzielt werden. Die weiter oben bereits erwähnte Abkühlzeit von etwa 25 - 30 Sekunden wird auch bei der zweistufigen Abkühlung erreicht, wobei eine übergabebedingte Unterbrechung der Kühlung nicht mitgerechnet ist.

Nach dem zweistufigen Abkühlung kann das warmumgeformte Strukturteil mit einem lokalen, hart eingelöteten Verstärkungsteil in beschnittenem Zustand entnommen und weiterverarbeitet werden. Die Werkstücke zeichnen sich durch eine hohe Festigkeit, geringes Gewicht, geringe Stückkosten sowie hohe Maß- und Formhaltigkeit aus. Durch die in den Prozeß des gemeinsamen Warmumformens integrierte Wärmebehandlung kann die Werkstofffestigkeit des Verbundbleches auf etwa 1300 - 1600 MPa gesteigert werden. Aufgrund der hohen Werkstofffestigkeit sind die so hergestellten, lokal verstärkten Strukturteile bestens für Leichtbaukonstruktionen, insbesondere als Schalenteile für in die Fahrgastzelle einer Fahrzeugkarosserie integrierte Hohlträger geeignet. Ein weiteres Anwendungsfeld innerhalb des Fahrzeugbaus sind lokal verstärkte Schalenteile für in das Fahrwerk eines Fahrzeuges integrierte Höhlträger.

Es ist aus Gründen einer möglichst kurzen Taktzeit anzustreben, die umgeformten Werkstücke innerhalb der Umformpresse lediglich auf eine solche Temperatur abzukühlen, bei der die Werkstücke ohne weiteres, insbesondere ohne unkontrollierte Gefügeveränderungen handhabbbar und/oder lagerbar sind. Eine solche Temperatur kann meist bei 100 bis 150°C angenommen werden. Zwar können so heiße Teile nicht ohne weiteres manuell gehandhabt werden. Deshalb ist eine weitere Abkühlung außerhalb der Umformpresse mittels Kühlluft entlang einer Kühlstrecke zu empfehlen, wobei die Werkstücke zur Vermeidung eines thermischen Verzuges mittels formangepaßter, durchlässiger Stützschalen abgestützt sein sollten. Hierbei kann der Kühlluft kalter Wassernebel und/oder - insbesondere bei Annäherung an die Raumtemperatur - flüssige Luft zugesetzt werden.

Im Zusammenhang mit dem Verfahrensschema nach den Figuren 1a und 1b seien der Vollständigkeit halber noch verschiedene Abwandlungen des Verfahrens erwähnt:

Das Verfahren ist nicht auf eine Hartlotverbindung der umgeformten Blechteile 2 und 3 angewiesen, wenngleich diese Verbindungsart sich besonders vorteilhaft mit der Warmumformung kombinieren läßt. Anstelle einer Hartlotverbindung kommt auch eine Verbindung durch eine Schweißverbindung in Betracht, wobei hier insbesondere alle gängigen Schweißverbindungen in Frage kommen. In diesem Zusammenhang seien besonders Punktschweißungen, MIG/MAG-Schweißungen oder Laserschweißungen erwähnt. In dem Verfahrensschema der Figur 1a würde in diesem Fall der Hartlotauftrag entfallen und statt dessen der Schweißvorgang durch den Schweißroboter 17 umfassender und u.U. nach anderen Schweißverfahren gestaltet werden. Es würden vor allem am Rand des Verstärkungsbleches Verbindungspunkte oder Schweißnahtstücke gesetzt werden. Zwar ist es grundsätzlich auch möglich, das Verstärkungsblech zunächst mittels nur eines Schweißpunktes oder weniger Schweißpunkte mit dem Basisblech zu verbinden und das vollständige tragfähige Verbinden erst nach dem Umformen vorzunehmen. Es ist jedoch aus verschiedenen Gründen eher zu empfehlen, das vollständige Zusammenschweißen von Verstärkungs- und Basisblech zumindest im Randbereich bereits vor der Warmumformung vorzunehmen. Zum einen lassen sich die Bleche im Flachzustand einfacher Handhaben und rationeller und prozeßsicherer schweißen. Zumanderen ist es besser, wenn die Schweißstellen die Wärmebehandlung mit durchlaufen im Vergleich zu der Variante, bei der die bereits wärmebehandelten Bleche nachträglich geschweißt werden. Schließlich ist es auch für den Umformprozeß besser, wenn die beteiligten Bleche sicher - insbesondere am Rand - miteinander verbunden sind. Es ist auch denkbar, die Bleche zueinander mit Silikon oder ähnlich dichtenden Materialien abzudichten.

Eine weitere Verfahrensvariante besteht darin, die Abkühlgeschwindigkeit des Verbundbleches nach der Warmumformung entsprechen einer lokal unterschiedlich gewünschten Werkstoffestigkeit unterschiedlich zu gestalten. Es sind Anwendungsfälle denkbar, bei denen aus Gründen eines geordneten Crashverhaltens eines Strukturteils lokal eine höhere Duktilität und niedrigere Festigkeit in ihm vorhanden sein sollen. Derartige Bereiche können ohne weiteres dadurch erreicht werden, daß das warmumgeformte Verbundblech an diesen Stellen gar nicht oder sehr langsam abgekühlt wird, wobei allerdings durch anhaltendes Kühlen der Übergangszone von Bereichen niedrigere Festigkeit zu den Bereichen mit gewünschter hoher Werkstoffestigkeit dafür gesorgt werden muß, daß sich kein Anlaßeffekt von der Schwachstelle (warm) zu den hochfesten Zonen (kalt) ergibt.

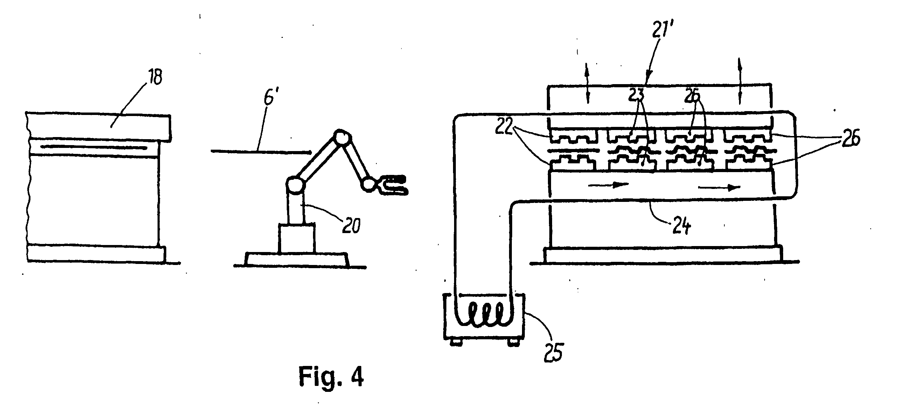

Es sei nun noch in Verbindung mit den Figuren 4 und 5 auf die vierstufige Verfahrensvariante zum Herstellen eines warmumgeformten, lokal verstärkten Strukturteiles eingegangen. Das in Figur 4 ausschnittsweise dargestellte Verfahrensschema entspricht weitgehend der Darstellung nach Figur 1b, so daß weitestgehend auf die Ausführungen im Zusammenhang mit dem weiter oben geschilderten Verfahren verwiesen werden kann. Lediglich die Umformpresse 21' unterscheidet sich durch die Anzahl der Stufen, nämlich vier, von der Umformpresse 21 nach Figur 1b mit nur zwei Stufen. Auch die beiden ersten Stufen der Umformpresse 21' stimmen weitgehend mit den beiden - einzigen - Stufen der Umformpresse 21 überein, d.h. es ist in der Umformpresse 21' zunächst ebenfalls ein zwangsgekühltes Umformwerkzeug 22 vorgesehen, dem sich ein ebenfalls gekühltes Fixier- und Beschneidewerkzeug 23 anschließt. Die Besonderheit der Umformpresse 21' gegenüber der nach Figur 1b besteht darin, daß innerhalb der länger ausgebildeten Umformpresse 21' zwei weitere, sich äquidistant anschließende Fixierwerkzeugen 26, die ebenfalls gekühlt sind, angeordnet sind. Sie unterscheiden sich von dem Fixier- und Beschneidewerkzeug 23 lediglich dadurch, daß sie keine Beschneidevorrichtung enthalten.

Aufgrund der vier in der Umformpresse 21' integrierten Werkzeuge 22, 23, 26 und 26 können die warmumgeformten Verbundbleche in vier aufeinander folgenden Stufen abgekühlt werden, was die Zykluszeit gegenüber der zweistufigen Abkühlung nach dem Verfahrensschema nach Figur 1b auf die halbe Zeit verkürzt. Die Gravuren der vier Werkzeuge berühren die Werkstücke beidseitig nahezu vollflächig und fixieren sie jeweils zuverlässig in ihrer Sollform. Aufgrund einer mittelbaren oder unmittelbaren Zwangskühlung der Werkstücke kann ihnen sehr rasch Wärme entzogen werden. Die Gravur des Umformwerkzeuges 22 ist, wie in Figur 2 angedeutet, durch integrierte Kühlkanäle zwangsgekühlt, wogegen die Fixierwerkzeuge 23 und 26 ein Raster von Kühlkanälen tragen, wobei diese zur formbestimmenden Oberfläche der Gravur hin offen sind, so daß das Kühlmedium - Luft, Luft/Wassernebel-Gemisch, Luft/Flüssigluft-Gemisch - die Werkstücke unmittelbar beaufschlagen kann. Im übrigen sind die Werkzeuge alle durch eine Transfereinrichtung miteinander verbunden, so daß die Werkstücke taktweise von Werkzeug zu Werkzeug weitergereicht werden können.

Die Vorgehensweise bei dem Verfahren mit der vierphasigen Abkühlung sei nachfolgend im Zusammenhang mit Figur 5 erläutert, die ein unquantifiziertes Temperatur/Zeitdiagramm bezüglich der mittleren Werkstücktemperatur, d.h. den zeitlichen Temperaturverlauf während der Umformung und der anschließenden mehrstufigen Abkühlung darstellt.

Der Zeitpunkt Null stellt den Moment dar, an dem das gepatchte Verbundblech bei etwa 930°C aus dem Ofen 18 entnommen wird. Während der kurzen Entnahmephase E kühlt das Blech bereits etwas ab und gelangt bei mindestens etwa 850°C in das geöffnete Umformwerkzeug 22 hinein.

Mit Ablauf des Einlegevorgangs E beginnt der Arbeitszyklus der Presse, von denen in Figur 5 vier aufeinander folgende Zyklen Z und der zugehörige Temperaturverlauf eines durch die Umformpresse 21' hindurchgetakteten Werkstückes dargestellt sind. Jeder Zyklus setzt sich aus einer Schließphase S, einer Fixierphase F und einer Öffnungsphase O zusammen. In der Schließphase S ist das Werkstück zumindest im Umformwerkzeug 22 noch nicht vollflächig von der gekühlten Gravur berührt, so daß die Kühlwirkung der Gravur während der Schließ- und Umformphase noch nicht voll zum tragen kommt. Auch bei den späteren Zyklen Z, bei denen sich das Werkstück in den Fixierwerkzeugen 23 bzw. 26 befindet, setz die volle Kühlwirkung erst nach Abschluß des Schließvorganges S ein.

Sobald der Schließvorgang der Werkzeuge beendet ist - beim Umformwerkzeug ist zu diesem Zeitpunkt auch die Warmumformung des gepatchten Verbundbleches beendet -, beginnt die Fixierphase F, während der aufgrund des innigen Kontaktes der Werkzeuggravur mit dem Werkstück die eigentliche Abkühlung desselben innerhalb des jeweiligen Zyklus' stattfindet. In der ersten, an die Warmumformung anschließenden Fixier- und Abkühlphase muß das Werkstück bis deutlich unterhalb der Erstarrungstemperatur E_{L} des Hartlotes abgekühlt werden, damit die Hartlötung nach dem Öffnen des Werkzeuges sicher hält und nicht etwa partiell aufspringt. Außerdem muß das Werkstück gegen Ende der ersten Fixier- und Abkühlphase unter Einhaltung eines bestimmten zeitlichen Temperaturgradienten auf etwa 500°C abgekühlt sein, damit die gewünschte Werkstofffestigkeit im Werkstück gegeben ist. Die Fixier- und Abkühlphase F ist maßgebend für die Zykluszeit Z, weil sie darin den größten Anteil hat.

Sobald die Fixier- und Abkühlphase eines Zyklus' abgeschlossen ist, kann die Umformpresse und können mit ihr die Werkzeuge geöffnet werden - Öffnungsphase O. Bereits bei teilweise geöffneten Werkzeugen ergreift die Transfereinrichtung die in den Werkzeugen freigelegten Werkstücke, hebt sie aus den Matrizen heraus, transferiert sie in die Matrize des nächstfolgenden Werkzeuges und legt sie dort geordnet ab, wobei bereits der nächste Schließvorgang beginnt. Während der Öffnungsphase O liegt das Werkstück nur lose in der Gravur des jeweils unteren Werkzeugteiles und wird weder oberseitig, noch auch von unten vollflächig und innig von der jeweiligen Gravur berührt, so daß auch während der Öffnungsphasen die Kühlwirkung der Gravur nur mäßig zur Wirkung kommt.

Mit Rücksicht auf eine Verminderung des Temperaturgefälles zwischen Werkstück und Kühlmedium sind die Abkühlraten in den weiter hinten liegenden Zyklen geringer als in den weiter vorne liegenden Kühlvorgängen, die bei einer größeren Temperaturdifferenz stattfinden.

## Patentansprüche

1. Verfahren zum Herstellen eines räumlich geformten, aus einem Basisblech und aus wenigstens einem kleineren, lokal angeordneten Verstärkungsblech bestehenden Strukturteil, bei dem das Basisblech des Strukturteils im Flachzustand oder in einem unvollständig umgeformten Vorformungszustand mit dem Verstärkungsblech an der für die spätere Verstärkungsstelle vorbestimmten Stelle verbunden und die Teile des gepatchten Verbundblechs anschließend mittels eines öffen- und schließbaren Umformwerkzeuges in einer Umformpresse gemeinsam umgeformt werden,
**dadurch gekennzeichnet, daß**
das gepatchte Verbundblech (6, 6') vor dem gemeinsamen Umformen auf eine oberhalb der Umformtemperatur des Werkstoffs liegende Temperatur erwärmt, im Warmzustand in die gewünschte Form umgeformt und anschließend unter mechanischer Fixierung des gewünschten Umformzustandes in dem geschlossen gehaltenen Umformwerkzeug (22) oder einem anschließenden Fixierwerkzeug (23, 26) abgekühlt wird.

2. Verfahren nach Anspruch 1,
**dadurch gekennzeichnet, daß**
die Teile des gepatchten Verbundblechs (6') oberhalb einer solchen Gefügeumwandlungstemperatur des Werkstoffes erwärmt werden, oberhalb der das Werkstoffgefüge in austenitischen Zustand vorliegt.

3. Verfahren nach Anspruch 1,
**dadurch gekennzeichnet, daß**
das gepatchte Verbundblech (6') vor dem gemeinsamen Umformen auf eine bestimmte Temperatur innerhalb des Temperaturbereiches zwischen 850 und 930°C erwärmt wird.

4. Verfahren nach Anspruch 1,
**dadurch gekennzeichnet, daß**
das wenigstens eine Verstärkungsblech (3') oder wenigstens eines der Verstärkungsbleche seinerseits vor dem Zusammenbringen mit dem Basisblech (2) durch Anbringen von Verstärkungssicken (7) in der Weise vorgeformt wird, daß es sich gleichwohl an der vorbestimmten Stelle formgetreu an das Basisblech (2) anlegen und mit ihm fixieren läßt.

5. Verfahren nach Anspruch 1,
**dadurch gekennzeichnet, daß**
das Entnehmen des erwärmten Verbundblechs (6') aus einer Erwärmungseinrichtung, insbesondere aus einem Ofen (18) und das lagedefinierte Einlegen des Verbundblechs (6') in das geöffnete Umformwerkzeug (22) bis zum Beginn des Schließens des Umformwerkzeuges (22) in weniger als drei Sekunden, vorzugsweise in weniger als zwei Sekunden erfolgt (Zeitspanne E).

6. Verfahren nach Anspruch 1,
**dadurch gekennzeichnet, daß**
das gemeinsame Umformen des lagedefiniert in das geöffnete Umformwerkzeug (22) eingelegten, erwärmten Verbundblechs (6') vom Beginn des Schließens des Umformwerkzeuges (22) an gerechnet bis zum vollständigen Umformen in wenigstens 3 bis 5 Sekunden erfolgt (Zeitspanne S).

7. Verfahren nach Anspruch 1,
**dadurch gekennzeichnet, daß**
das Abkühlen des gemeinsam umgeformten Verbundblechs zumindest in einer ersten Abkühlphase auf dem Umformwerkzeug durch Kontaktierung mit dem von innen her zwangsgekühlten (33, 34) Umformwerkzeug (22) erfolgt.

8. Verfahren nach Anspruch 7,
**dadurch gekennzeichnet, daß**
das gepatchte Verbundblech nach dem gemeinsamen Umformen unter Verbleib in dem geschlossen gehaltenen Umformwerkzeug (22) zumindest bis auf etwa 500°C abgekühlt wird.

9. Verfahren nach Anspruch 1,
**dadurch gekennzeichnet, daß**
das gepatchte Verbundblech nach dem gemeinsamen Umformen unter Verbleib in dem geschlossen gehaltenen Umformwerkzeug (22) zunächst auf etwa 500°C abgekühlt und anschließend in ein benachbartes, öffen- und schließbares Fixierwerkzeug (23, 26) übergeben wird, welches das darin aufgenommene, umgeformte Verbundblech mittels einer formgetreuen Gravur im geschlossen Zustand beidseitig flächig berührt und den gewünschten Umformzustand des Verbundbleches weiterhin mechanisch fixiert, wobei das umgeformte Verbundblech in dem dann vorliegenden Warmzustand durch ein in dem Fixierwerkzeug integrierten Beschneidungswerkzeug beschnitten und durch die zwangsgekühlte Gravur des Fixierwerkzeuges weiterhin abgekühlt wird.

10. Verfahren nach Anspruch 1,
**dadurch gekennzeichnet, daß**
das Zwangskühlen des gepatchten Verbundbleches nach dem gemeinsamen Umformen zunächst in dem Umformwerkzeug (22) und anschließend - abgesehen von kurzen Übergabe-bedingten Unterbrechungen - unter steter mechanischer Fixierung des gewünschten Umformzustandes des Verbundbleches durch eine Folge von benachbarten, öffen- und schließbaren Fixierwerkzeugen (23, 26) durchgeführt wird, welche das darin jeweils aufgenommene Verbundblech mittels einer formgetreuen Gravur im geschlossen Zustand beidseitig flächig berühren, wobei das von Fixierwerkzeug (23, 26) zu Fixierwerkzeug (26) weitergereichte Verbundblech durch die von innen zwangsgekühlten Gravuren der Fixierwerkzeuge (23, 26) in mehreren aufeinander folgenden Etappen (Z) bis mindestens auf 150°C abgekühlt wird.

11. Verfahren nach Anspruch 1 oder 10,
**dadurch gekennzeichnet, daß**
das gepatchte Verbundblech nach dem gemeinsamen Umformen entweder durch das Umformwerkzeug (22) alleine oder gemeinsam mit einer anschließenden Folge von Fixierwerkzeugen (23, 26) 20 - 40 Sekunden lang, vorzugsweise etwa 25 - 30 Sekunden lang, gekühlt wird.

12. Verfahren nach Anspruch 1,
**dadurch gekennzeichnet, daß**
zur Erzielung eines martensitischen Werkstoffgefüges im umgeformten Verbundblech dieses zumindest im Temperaturbereich zwischen 800 und 500°C rasch, d.h. von 800 auf 500°C in weniger als vier Sekunden abgekühlt wird.

13. Verfahren nach Anspruch 1,
**dadurch gekennzeichnet, daß**
zur Erzielung eines bainitischen Werkstoffgefüges im umgeformten Verbundblech dieses zumindest im Temperaturbereich zwischen 800 und 500°C vergleichsweise langsam, nämlich von 800 auf 500°C in einer länger als vier Sekunden dauernden Zeitspanne abgekühlt wird.

14. Verfahren nach Anspruch 1,
**dadurch gekennzeichnet, daß**
vor dem Anbringen des Verstärkungsbleches (3, 3') an dem Basisblech (2) wenigstens eines der Bleche (2) an der Kontakti fläche flächendeckend mit einem Hartlot (4) versehen, dieses während des Erwärmens auf Umformtemperatur erschmolzen und das gemeinsam umgeformte Verbundblech unter mechanischer Fixierung des Umformzustandes in dem geschlossen gehaltenen Umformwerkzeug (22) wenigsten bis zur vollständigen Erstarrung des Hartlotes (4) abgekühlt wird.

15. Verfahren nach Anspruch 14,
**dadurch gekennzeichnet, daß**
die Kontaktfläche des wenigstens einen mit Hartlot (4) versehenen Bleches (2) mit einem Überschuß an Hartlot (4) versehen und dieser Überschuß (35) während des gemeinsamen Umformens am Rand des Verstärkungsbleches (3) ausgepreßt wird.

16. Verfahren nach Anspruch 14,
**dadurch gekennzeichnet, daß**
die Kontaktflächen sowohl des Basis- (2) als auch des Verstärkungsbleches (3, 3') vor dem Auftragen mit Hartlot (4) gereinigt und/oder für ein Hartlöten aktiviert werden.

17. Verfahren nach Anspruch 14,
**dadurch gekennzeichnet, daß**
das Hartlot (4) in Pastenform aufgetragen wird.

18. Verfahren nach Anspruch 14,
**dadurch gekennzeichnet, daß**
das Hartlot in Form von Spänen aufgebracht wird.

19. Verfahren nach Anspruch 14,
**dadurch gekennzeichnet, daß**
das Hartlot in Form eines formentsprechend ausgestanzten Zuschnittes einer Lötfolie aufgebracht wird.

20. Verfahren nach Anspruch 14,
**dadurch gekennzeichnet, daß**
ein Hartlot (4) verwendet wird, dessen Erstarrungstemperatur mindestens 500°C, vorzugsweise mindestens 550°C beträgt.

21. Verfahren nach Anspruch 14,
**dadurch gekennzeichnet, daß**
nach dem Auftragen des Hartlots (4) und nach dem lagedefinierten Auflegen des Verstärkungsbleches (3, 3') auf das Basisblech (2) beide durch einen einzigen Heftpunkt (5) vorläufig aufeinander fixiert werden.

22. Verfahren nach Anspruch 1 oder 14,
**dadurch gekennzeichnet, daß**
das Erwärmen des gepatchten Blechverbundes (6) im Ofen (18) in einer Schutzgasatmosphäre (Schutzgas 19) erfolgt.

23. Verfahren nach Anspruch 1 oder 14,
**dadurch gekennzeichnet, daß**
das Basisblech (2) und/oder das Verstärkungsblech (3, 3') aus einem wasserhärtenden Vergütungsstahl mit der nachfolgend aufgeführten Legierungszusammensetzung besteht, wobei die Gehalte in Gew.-% zu verstehen sind und zusätzlich zu dem Basismetall Eisen hinzuzufügen sind:
| | |
|---|---|
| Kohlenstoff | 0,23 - 0,27 %, |
| Silizium | 0,15 - 0,50 %, |
| Mangan | 1,10 - 1,40 %, |
| Chrom | 0,10 - 0,35 %, |
| Molybdän | 0 - 0,35 %, |
| Titan | 0,03 - 0,05 %, |
| Aluminium | 0,02 - 0,06 %, |
| Phosphor | max. 0,025 %, |
| Schwefel | max. 0,01 % und |
| andere insgesamt | 0,0020 - 0,0035 %. |

24. Verfahren nach Anspruch 1, **dadurch gekennzeichnet, daß** das Basisblech (2) und/oder das Verstärkungsblech (3, 3') gegen Korrosion anorganisch vorbeschichtet ist und aus einem Stahl mit der nachfolgend aufgeführten Legierungszusammensetzung besteht, wobei die Gehalte in Gew.-% zu verstehen sind und zusätzlich zu dem Basismetall Eisen hinzuzufügen sind:
| | |
|---|---|
| Kohlenstoff | 0,20 - 0,25 %, |
| Silizium | 0,15 - 0,35 %, |
| Mangan | 1,10 - 1,35 %, |
| Chrom | 0,10 - 0,35 %, |
| Titan | 0,02 - 0,05 %, |
| Schwefel | max. 0,008 % und |
| andere insgesamt | 0,002 - 0,004 % |

25. Verfahren nach Anspruch 1 oder 14,
**dadurch gekennzeichnet, daß**
die Werkstofffestigkeit des Verbundbleches durch die in den Prozeß des gemeinsamen Warmumformens integrierte Wärmebehandlung auf etwa 1300 - 1600 MPa gesteigert wird.

26. Verfahren nach Anspruch 1 oder 14,
**dadurch gekennzeichnet, daß**
danach lokal verstärkte Schalenteile für in die Fahrgastzelle einer Fahrzeugkarosserie integrierte Hohlträger hergestellt werden.

27. Verfahren nach Anspruch 1 oder 14,
**dadurch gekennzeichnet, daß**
danach lokal verstärkte Schalenteile für in das Fahrwerk eines Fahrzeuges integrierte Hohlträger hergestellt werden.

## Claims

1. Process for producing a structural part comprising a spatially formed fundamental plate and a smaller localized reinforcing plate, in which the fundamental plate of the structural part, in the flat state or in an unfully pre-formed state, is connected, at the pre-determined reinforcement point, to the reinforcing plate, and the parts of the patched connection plate are then shaped, in a press, by means of a shaping tool implement, that can be opened and closed,
**characterized in that**,
the patched connection plate (6, 6') is, before general heating of the structural part, heated to a temperature above that at which the material is shaped, and is, in the heated state, shaped into the desired form and is then cooled with mechanical fixing, in the closed shaping implement (22) or a subsequent fixing tool (23, 26) of the desired shape.

2. Process in accordance with claim 2,
**characterized in that**
the parts of the patched connection plate (6') are heated to a temperature above that at which the structure of the given material changes, the temperature concerned being above that at which the structure of the given material is in its austenitic state.

3. Process in accordance with claim 1,
**characterized in that**
the connection plate (6') is heated to a set temperature, within the range between 850 and 930°, before the overall shaping.

4. Process in accordance with claim 1,
**characterized in that**
at least one reinforcing plate (3') or at least one of the reinforcing plates is preshaped, before connection to the fundamental plate (2), through application of reinforcing fins or corrugations (7), such that it can accurately be placed on and attached to the fundamental plate (2), at the set point.

5. Process in accordance with claim 1,
**characterized in that**
removal of the heated connection plate (6') from a heating device, particularly from an oven (18) and the insertion, in a specific position, of the connection plate (6') in the open shaping implement (22), up until the start of closure of the forming tool (22), occurs in less than three seconds, preferably less than two seconds (duration E).

6. Process in accordance with claim 1,
**characterized in that**
the joint shaping of the connection plate (6'), that is placed in a specific position in the shaping tool (22), from the start of closure of the shaping tool (22) until complete shaping, occurs in between less than three and five seconds (duration S).

7. Process in accordance with claim 1,
**characterized in that**
cooling of the jointly shaped connection plate at least occurs, in a first cooling stage, on the shaping tool, through contact with the shaping tool (33, 34) which is force-cooled from the inside outwards.

8. Process in accordance with claim 7,
**characterized in that**
the patched connection plate is at least cooled to around 500°C, while remaining in the shaping tool that is kept closed.

9. Process in accordance with claim 1,
**characterized in that**
the patched connection plate is, after joint shaping while remaining in the shaping tool (22) that is kept closed, first cooled to approximately 500°C, and is then transferred to an adjacent fixing tool (23, 26) which can be opened and closed, and which makes areal contact, in the closed state, by means of an undistorted engraving, on both sides, with the shaped connection plate taken up in it, and the desired shaped state of the connection plate is further determined mechanically, whereby the shaped connection plate is cut, in the heated state it is in at the time, by a cutting tool built into the fixing tool, and is further cooled by the forced cooling of the fixing tool.

10. Process in accordance with claim 1,
**characterized in that**
the forced cooling of the patched connection first takes place, after joint shaping, in the shaping tool (22) and is then, apart from short interruptions caused by the transfer, carried out through continuous mechanical fixing of the required shape of the connection plate by a series of adjacent fixing tools (23, 26) that can be opened and closed, and that in each case make areal contact, by means of an undistorted engraving, with both sides of the connection plate that is in each case taken up in the said fixing tools that can be opened and closed, whereby the connection plate that is passed on from one fixing tool (23, 26) to another (26) is cooled, in several successive stages (Z), by means of the engravings, of the fixing tools (23, 26), which are cooled from the inside, to a temperature of at least 150°C.

11. Process in accordance with claims 1 or 10,
**characterized in that**
the patched connection plate is, after the joint shaping, cooled for 20 - 40 seconds, preferably 25 - 30 seconds, either through the shaping tool (22) alone or jointly, in conjunction with a subsequent series of fixing tools (23, 26).

12. Process in accordance with claim 1,
**characterized in that**
in order to achieve a martensitic material structure in the shaped connection plate, the latter is quickly cooled, at least in the temperature range between 800 and 500°C, that is, from 800 to 500°C, in less than four seconds.

13. Process in accordance with claim 1,
**characterized in that**
in order to achieve a bainitic material structure in the shaping plate, the latter is, at least in the temperature range between 800 and 500°C, cooled relatively slowly, namely, it is cooled from 800 to 500°C in a time period lasting longer than 4 seconds.

14. Process in accordance with claim 1,
**characterized in that**,
before attachment of the reinforcing plate (3, 3') to the fundamental plate (2), at least one of the plates (2) is provided on the contact surface with a hard solder (4) that covers the said surface, and **in that** this hard solder is melted during heating to the shaping temperature and **in that** the jointly shaped connection plate is cooled, at least until complete solidification of the hard solder (4), by mechanical fixing of the shaped form in the shaping tool (22), which is kept closed.

15. Process in accordance with claim 14,
**characterized in that**
the contact surface of the at least one plate (2) that is provided with hard solder (4) is provided with an excess of hard solder (4) and this excess (35) is pressed out from the edge of the reinforcing plate (3) during the joint shaping.

16. Process in accordance with claim 14,
**characterized in that**
the contact surfaces of both the fundamental (2) and the reinforcing plate (3, 3') are cleaned before the hard solder (4) is applied to them and/or they are activated for hard soldering.

17. Process in accordance with claim 14,
**characterized in that**
the hard solder (4) is applied in paste form.

18. Process in accordance with claim 14,
**characterized in that**
the hard solder is applied in chip form.

19. Process in accordance with claim 14,
**characterized in that**
the hard solder is applied in the form of a corresponding blank punched out from a sheet of solder.

20. Process in accordance with claim 14,
**characterized in that**
the hard solder (4) used has a solidification temperature of at least 500°C, preferably at least 550°C.

21. Process in accordance with claim 14,
**characterized in that**
after application of the hard solder (4) and after positioning of the reinforcing plate (3, 3') on the fundamental plate (2), the two are preliminarily fixed to each other at a single stitched point.

22. Process in accordance with claims 1 or 14,
**characterized in that**
heating of the patched plate connection (6) in the oven (18) occurs in a buffer gas (19).

23. Process in accordance with claims 1 or 14,
**characterized in that**
the fundamental plate (2) and/or the reinforcing plate (3, 3') is made of a water-hardening heat-treatable steel with the following composition as an alloy, whereby the amounts of the different constituents are expressed in %-weight and are to be additionally added to the fundamental metal iron:
| | |
|---|---|
| carbon | 0.23 - 0.27%, |
| silicon | 0.15 - 0.5% |
| manganese | 1.1 - 1.4% |
| chromium | 0.1 - 0.35% |
| molybdenum | 0 - 0.35% |
| titanium | 0.03 - 0.05% |
| aluminium | 0.02 - 0.06% |
| phosphorus | max. 0.025% |
| sulphur | max. 0.01% and |
| others | 0.0020 - 0.0035% |

24. Process in accordance with claim 1,
**characterized in that**
the fundamental plate (2) and/or the reinforcing plate (3, 3') is inorganically precoated against corrosion and is made of a steel with the alloy constituents, to be added to the fundamental metal iron, listed below, with the content of the given constituent being expressed as a percentage of total weight:
| | |
|---|---|
| carbon | 0.2 - 0.25% |
| silicon | 0.15 - 0.35% |
| manganese | 1.1 - 1.35% |
| chromium | 0.1 - 0.35% |
| titanium | 0.02 - 0.05% |
| others | 0.002 - 0.004%. |

25. Process in accordance with claims 1 or 14,
**characterized in that**
the strength of the material of the connection plate is increased to approximately 1300 - 1600 MPa, by the heat treatment that is integrated into the process of joint shaping under heat.

26. Process in accordance with claims 1 or 14,
**characterized in that**
locally reinforced shell sections, for hollow struts integrated into the passenger compartment of a car body, are produced.

27. Process in accordance with claims 1 or 14,
**characterized in that**
locally reinforced shell sections, for hollow struts that are integrated into a vehicle chassis, are produced.

## Revendications

1. Procédé pour fabriquer une pièce structurée modelée dans l'espace, à partir d'une tôle de base et d'au moins une tôle de renforcement plus petite agencée localement, dans lequel :
- la tôle de base de la pièce structurée est reliée à la tôle de renforcement dans l'état plat ou dans un état de pré-formage non entièrement reformé, à l'endroit prédestiné pour le point de renforcement ultérieur ; et
- les pièces de la tôle composite rapportée sont ensuite reformées en commun dans une presse de reformage au moyen d'un outil de reformage pouvant être ouvert et fermé,
**caractérisé en ce que**, avant le reformage commun, la tôle composite rapportée (6, 6') est échauffée à une température supérieure à la température de reformage du matériau, reformée à l'état chaud dans la forme souhaitée et est ensuite refroidie sous la fixation mécanique de l'état de reformage souhaité dans l'outil de reformage maintenu fermé (22) ou dans un outil de fixation suivant (23, 26).

2. Procédé selon la revendication 1, **caractérisé en ce que** les parties de la tôle composite rapportée (6') sont échauffées au-dessus d'une telle température de transformation de la structure du matériau au-dessus de laquelle la structure du matériau se trouve dans un état austénitique.

3. Procédé selon la revendication 1, **caractérisé en ce que**, avant le reformage commun, la tôle composite rapportée (6') est échauffée à une certaine température dans la plage de température entre 850 et 930°C.

4. Procédé selon la revendication 1, **caractérisé en ce que** ladite au moins une tôle de renforcement (3') ou au moins une des tôles de renforcement est pré-formée pour sa part avant l'assemblage avec la tôle de base (2) par l'apposition de moulures de renforcement (7) de manière à pouvoir venir quand même en contact sur le point pré-déterminé sur la tôle de base (2) avec la même la forme et être fixée avec celle-ci.

5. Procédé selon la revendication 1, **caractérisé en ce que** le prélèvement de la tôle composite échauffée (6') en dehors d'un dispositif d'échauffement, en particulier en dehors d'un four (18), et la mise en place dans une position définie de la tôle composite (6') dans l'outil de reformage ouvert (22) jusqu'au commencement de la fermeture de l'outil de reformage (22) ont lieu en moins de trois secondes, de préférence en moins de deux secondes (laps de temps E).

6. Procédé selon la revendication 1, **caractérisé en ce que** le reformage commun de la tôle composite (6') mise en place dans une position définie dans l'outil de reformage ouvert (22) et échauffée a lieu en au moins 3 à 5 secondes, en comptant depuis le commencement de la fermeture de l'outil de reformage (22) jusqu'au reformage complet (laps de temps S).

7. Procédé selon la revendication 1, **caractérisé en ce que** le refroidissement de la tôle composite reformée en commun a lieu au moins au cours d'une première phase de refroidissement sur l'outil de reformage par une amenée en contact avec l'outil de reformage (22) à refroidissement forcé depuis l'intérieur.

8. Procédé selon la revendication 7, **caractérisé en ce que**, après le reformage commun sous séjour dans l'outil de reformage maintenu fermé (22), la tôle composite rapportée est au moins refroidie jusqu'à environ 500°C.

9. Procédé selon la revendication 1, **caractérisé en ce que**, après le reformage commun sous séjour dans l'outil de reformage maintenu fermé (22), la tôle composite rapportée est refroidie tout d'abord à environ 500°C et est ensuite transférée dans un outil de fixation avoisinant (23, 26) pouvant être ouvert et fermé qui touche la tôle composite réceptionnée dedans et reformée au moyen d'une gravure de forme identique, dans l'état fermé, des deux côtés, en surface et qui fixe en outre mécaniquement l'état de reformage souhaité de la tôle composite, la tôle composite reformée étant ensuite découpée dans l'état chaud existant par un outil de découpage intégré dans l'outil de fixation et étant en outre refroidie par la gravure à refroidissement forcé de l'outil de fixation.

10. Procédé selon la revendication 1, **caractérisé en ce que** le refroidissement forcé de la tôle composite rapportée après le reformage commun est exécuté tout d'abord dans l'outil de reformage (22) et ensuite - à l'exception de brèves interruptions dues au transfert - sous fixation mécanique continue de l'état de reformage souhaité de la tôle composite, par une série d'outils de fixation avoisinants (23, 26) pouvant être ouverts et fermés, lesquels touchent la tôle composite respectivement réceptionnée dedans au moyen d'une gravure de forme identique, dans l'état fermé, des deux côtés, en surface, la tôle composite retransmise d'un outil de fixation (23, 26) à un outil de fixation (26) étant refroidie jusqu'à au moins 150°C par les gravures à refroidissement forcé depuis l'intérieur des outils de fixation (23, 26) en plusieurs étapes consécutives (Z).

11. Procédé selon la revendication 1 ou 10, **caractérisé en ce que** la tôle composite rapportée est refroidie pendant 20 à 40 secondes, de préférence pendant 25 à 30 secondes, après le reformage commun soit par l'outil de reformage seul (22) soit en communauté avec une série d'outils de fixation (23, 26) s'en suivant.

12. Procédé selon la revendication 1, **caractérisé en ce que**, pour viser une structure de matériau martensitique dans la tôle composite reformée, celle-ci est refroidie rapidement au moins dans la plage de température entre 800 et 500°C, c'est-à-dire de 800 à 500°C, en moins de quatre secondes.

13. Procédé selon la revendication 1, **caractérisé en ce que**, pour viser une structure de matériau bainitique dans la tôle composite reformée, celle-ci est refroidie en comparaison lentement au moins dans la plage de température entre 800 et 500°C, à savoir de 800 à 500°C, dans un laps de temps supérieur à quatre secondes.

14. Procédé selon la revendication 1, **caractérisé en ce que** :
- avant la mise en place de la tôle de renforcement (3, 3') sur la tôle de base (2), au moins une des tôles (2) est munie d'un métal d'apport de brasage fort (4) sur toute la surface de contact ;
- celui-ci est fondu à la température de reformage pendant l'échauffement ; et
- la tôle composite reformée en commun est refroidie au moins jusqu'à la solidification complète du métal d'apport de brasage fort (4), sous la fixation mécanique de l'état de reformage dans l'outil de reformage maintenu fermé (22).

15. Procédé selon la revendication 14, **caractérisé en ce que** la surface de contact de ladite au moins une tôle (2) munie d'un métal d'apport de brasage fort (4) est munie d'un excédent de métal d'apport de brasage fort (4) et **en ce que** cet excédent (35) est pressé vers l'extérieur sur le bord de la tôle de renforcement (3) pendant le reformage commun.

16. Procédé selon la revendication 14, **caractérisé en ce que** les surfaces de contact, aussi bien de la tôle de base (2) que de la tôle de renforcement (3, 3'), sont nettoyées avant l'application du métal d'apport de brasage fort (4) et/ou activées pour un brasage fort.

17. Procédé selon la revendication 14, **caractérisé en ce que** le métal d'apport de brasage fort (4) est appliqué sous forme de pâte.

18. Procédé selon la revendication 14, **caractérisé en ce que** le métal d'apport de brasage fort est appliqué sous forme de copeaux.

19. Procédé selon la revendication 14, **caractérisé en ce que** le métal d'apport de brasage fort est appliqué sous forme d'une découpe estampée d'un film de brasage, en fonction de la forme.

20. Procédé selon la revendication 14, **caractérisé en ce que** l'on utilise un métal d'apport de brasage fort (4) dont la température de solidification est d'au moins 500°C, de préférence d'au moins 550°C.

21. Procédé selon la revendication 14, **caractérisé en ce que**, après l'application du métal d'apport de brasage fort (4) et après la pose dans une position définie de la tôle de renforcement (3, 3') sur la tôle de base (2), les deux tôles sont fixées provisoirement l'une à l'autre par un seul point de maintien (5).

22. Procédé selon la revendication 1 ou 14, **caractérisé en ce que** l'échauffement de la tôle composite rapportée (6) dans le four (18) a lieu dans une atmosphère de gaz inerte (gaz inerte 19).

23. Procédé selon la revendication 1 ou 14, **caractérisé en ce que** la tôle de base (2) et/ou la tôle de renforcement (3, 3') est (sont) constituée (s) d'un acier d'amélioration durci à l'eau présentant la composition d'alliages listée ci-après, les teneurs devant être comprises en pourcentage du poids et devant être ajoutées en supplément au métal de base FER :
- carbone : 0,23 - 0,27% ;
- silicium : 0,15 - 0,50% ;
- manganèse : 1,10 - 1,40% ;
- chrome : 0,10 - 0,35% ;
- molybdène : 0 - 0,35% ;
- titane : 0,03 - 0,05% ;
- aluminium : 0,02 - 0,06% ;
- phosphore : maximal 0,025% ;
- soufre : maximal 0,01% ; et
- autres au total : 0,0020 - 0,0035%.

24. Procédé selon la revendication 1, **caractérisé en ce que** la tôle de base (2) et/ou la tôle de renforcement (3, 3') est (sont) pré-enduite(s) de manière inorganique contre la corrosion et est (sont) constituée(s) d'un acier présentant la composition d'alliages listée ci-après, les teneurs devant être comprises en pourcentage du poids et devant être ajoutées en supplément au métal de base FER :
- carbone : 0,20 - 0,25% ;
- silicium : 0,15 - 0,35% ;
- manganèse : 1,10 - 1,35% ;
- chrome : 0,10 - 0,35% ;
- titane : 0,02 - 0,05% ;
- soufre : maximal 0,008% ; et
- autres au total : 0,002 - 0,004%.

25. Procédé selon la revendication 1 ou 14, **caractérisé en ce que** la résistance de matériau de la tôle composite est augmentée à environ 1300 - 1600 MPa par le traitement thermique intégré dans le processus du reformage à chaud commun.

26. Procédé selon la revendication 1 ou 14, **caractérisé en ce que** des pièces de coque renforcées ensuite localement sont fabriquées pour des poutres creuses intégrées dans l'habitacle de passager d'une carrosserie de véhicule.

27. Procédé selon la revendication 1 ou 14, **caractérisé en ce que** des pièces de coque renforcées ensuite localement sont fabriquées pour des poutres creuses intégrées dans le mécanisme de roulement d'un véhicule.
